# EUROPEAN PATENT SPECIFICATION

(11) **EP 4 124 674 B1**
(45) Date of publication and mention of the grant of the patent: **04.09.2024**
(21) Application number: 21188851.6
(22) Date of filing: 30.07.2021
(51) Int. Cl.: C25B 1/02, G05F 1/10, H02J 3/28

(54) **ELECTROLYZER PLANT COMPRISING A PLURALITY OF ELECTROLYZER MODULES AND A SYSTEM FOR CONTROLLING OPERATION OF THE ELECTROLYZER PLANT**
ELEKTROLYSEURANLAGE MIT EINER VIELZAHL AN ELEKTROLYSEURMODULEN UND SYSTEM ZUR STEUERUNG DES BETRIEBS DER ELEKTROLYSEURANLAGE
INSTALLATION D'ÉLECTROLYSEUR COMPRENANT UNE PLURALITÉ DE MODULES D'ÉLECTROLYSEUR ET SYSTÈME PERMETTANT DE COMMANDER LE FONCTIONNEMENT DE L'INSTALLATION D'ÉLECTROLYSEUR

(43) Date of publication of application: 01.02.2023
(73) Proprietor: ABB SCHWEIZ AG, 5400 Baden (CH)
(72) Inventor: GUTERMUTH, Georg, 69115 Heidelberg (DE); FRANKE, Rüdiger, 68623 Lampertheim (DE); BISKOPING, Matthias, 69493 Hirschberg (DE); LENDERS, Felix, 64293 Darmstadt (DE); GRINDLER, Clemens, 68309 Mannheim (DE)
(74) Representative: Maiwald GmbH

(56) References cited:
- EP-A1- 2 565 296
- EP-A1- 3 026 510
- US-A1- 2020 241 491
- INGOLE DEEPAK ET AL: "Model predictive control of a combined electrolyzer-fuel cell educational pilot plant", 2017 21ST INTERNATIONAL CONFERENCE ON PROCESS CONTROL (PC), IEEE, 6 June 2017 (2017-06-06), pages 149 - 154, XP033121857, DOI: 10.1109/PC.2017.7976205
- KAMAL TARIQ ET AL: "Design and power control of fuel cell/electrolyzer/microturbine/ultra-capacitor hybrid power plant", 2015 INTERNATIONAL CONFERENCE ON EMERGING TECHNOLOGIES (ICET), IEEE, 19 December 2015 (2015-12-19), pages 1 - 6, XP032854020, ISBN: 978-1-5090-2013-3, [retrieved on 20160120], DOI: 10.1109/ICET.2015.7389178

## Description

### FIELD OF THE INVENTION

The invention relates to an electrolyzer plant comprising a plurality of electrolyzer modules and a system for controlling operation of the electrolyzer plant, a use of a system for controlling the operation of an electrolyzer plant, a computer program product, a computer-readable medium, and a method for controlling operation of an electrolyzer plant comprising a plurality of electrolyzer modules.

### BACKGROUND

For production and scaling purpose, electrolyzer plants are often contain several modules that again contain several stacks.

Typically, electrolyzer plants of this kind are configured such that some or all of the electrolyzer modules run in parallel during operation of the electrolyzer plant.

Electrolyzer plants of this kind generally comprise a control device configured to control the operation of the plurality of electrolyzer modules in a coordinated manner, which, hereinafter, is also referred to as coordinated control of the electrolyzer modules. In particular, it may be configured to control the electrolyzer module set point for each of the electrolyzer modules. The term "electrolyzer module set point" may refer to the production set point, which indicates the hydrogen output of the electrolyzer module, or to a load or power set point of the electrolyzer module.

The operation of the electrolyzer plant is performed at a predetermined set point, which may refer to the production set point, which indicates the total electrolyzer plant's hydrogen output, or to a load or power set point of the electrolyzer plant. The control device controls operation of the plurality of electrolyzer modules in such a manner that the sum of the set points of the plurality of electrolyzer modules, also referred to as electrolyzer module set points, equals the predetermined set point of the electrolyzer plant. In other words, the control device assigns individual set points to each of the electrolyzer modules such that the sum of all electrolyzer module set points matches the overall electrolyzer plant set point. For sake of completeness, it is noted that when the electrolyzer module set point refers to the production set point of the electrolyzer module then the overall electrolyzer plant set point refers to the production set point of the electrolyzer plant and when the electrolyzer module set point refers to the load or power set point of the electrolyzer module then the overall electrolyzer plant set point refers to the load or power set point of the electrolyzer plant.

Currently, the coordinated control only takes into account the number of electrolyzer modules and required load and applies a rigid predetermined scheme for controlling their operation. For example, all electrolyzer modules may be assigned equal set points or a predetermined fixed switching sequence for the plurality of electrolyzer module set points may be applied, e.g., subsequently switching electrolyzer modules on in a predetermined order when the electrolyzer plant set point increases.

However, this manner of controlling the operation of the electrolyzer modules means that the operation will not be ideal, as such rigid schemes do not take into account that in reality characteristics of the electrolyzer modules will differ from each other significantly and may change over time, potentially to a varying degree. This means that the electrolyzer plant or modules often will not be operated in an ideal manner, which is detrimental to overall efficiency of the plant and/or degradation of the electrolyzer modules.

This manner of controlling the operation of the electrolyzer modules may also cause unfavorable and/or unpredictable maintenance patterns for the maintenance of the electrolyzer modules. Typically, maintenance of an electrolyzer module is necessary after a certain time span and/or number of operation cycles. When maintenance is necessary also depends on the characteristics of the individual electrolyzer module and on its operation, e.g., the overall operation time and at which operation point it is operated. Unfavorable maintenance patterns may, for example, entail that few modules need to be maintained often and others rarely, that module maintenance has to be performed at inopportune times, e.g., during periods of high production demand, and/or that many modules require maintenance at the same time. Unpredictable maintenance patterns decrease planning accuracy and, thereby, jeopardize reliability of the plant.

EP 2 565 296 A1, is directed at the setup and configuration of a plant, in particular, providing a suitable set of nested electrolyzer units that are independently operated. The selection of the units is made taking into account the units' deadbands, i.e., their operating range, to allow for a low overall system deadband and maximized system operating range, thereby allowing to minimize size and cost of the overall system.

US 2020/241491 A1, a method for controlling production of one or more refined resources by an energy provider, involves predicting a demand for the refined resources by multiple consumers of the refined resources as a function of an incentive.

### SUMMARY

It is an objective of the invention to provide a method and an electrolyzer plant with a system for controlling operation of an electrolyzer plant that, respectively, allow for controlling operation of the electrolyzer plant in a coordinated manner such that at least some of the above-described problems can be alleviated, for example, such that overall efficiency can be improved and/or degradation can be reduced and/or favorable and/or predictable maintenance patterns can be obtained.

The invention provides an electrolyzer plant and a method for controlling operation of an electrolyzer plant according to the independent claims. Preferred embodiments are set forth by the dependent claims.

The electrolyzer plant comprises a plurality of electrolyzer modules, particularly water electrolyzer modules, splitting water into hydrogen and oxygen, and a system for controlling operation of the electrolyzer plant. The system comprises a processing unit and is configured to determine, for each of the plurality of electrolyzer modules, an electrolyzer module set point at which the electrolyzer module is to be operated, wherein the electrolyzer module set points are determined such that their sum equals a prescribed overall plant set point of the electrolyzer plant, and control operation of each of the plurality of electrolyzer modules at the respective electrolyzer module set point. The determining comprises inputting data representative of operation characteristics of each of the plurality of electrolyzer modules into the processing unit and the processing unit performing an optimization procedure that outputs the electrolyzer module set points, the optimization procedure comprising an optimization for one or more of overall electrolyzer plant efficiency, electrolyzer plant lifetime, lifetime of each of each of the electrolyzer modules, operational safety, and maintenance patterns.

The claimed system allows for controlling operation of the electrolyzer plant in such a manner that the characteristics and capabilities of each of the electrolyzer modules can be optimally utilized to obtain a predetermined set point. Compared to the known rigid control schemes that do not take into account any such characteristics, overall electrolyzer plant operation can be improved in terms of different technical aspects, depending on the optimization objective of the optimization procedure and/or the constraints of the optimization procedure.

The plant lifetime and the lifetime of electrolyzer modules may each refer to overall lifetime or remaining lifetime.

An optimization being "performed for" the overall electrolyzer plant efficiency, overall plant lifetime, lifetime of each of each of the electrolyzer modules, and/or maintenance patterns means that it is the objective of the optimization procedure to obtain optimal overall electrolyzer plant efficiency, overall plant lifetime, lifetime of each of each of the electrolyzer modules, operational safety, and/or maintenance patterns. It is also possible to optimize for one of these potential objectives and use constraints that take into account one or more of the other potential objectives. As an example, the optimization procedure may comprise an optimization for overall plant efficiency within the boundaries provided by constraints that ensure that degradation of the electrolyzer modules, and thereby their lifetime, remain within a predetermined acceptable range or above/below an acceptable value. Additionally, or alternatively, constraints may serve to accommodate maintenance pattern. As an alternative, the optimization procedure may comprise an optimization for maintenance pattern, i.e., provide electrolyzer module set points that allow for the electrolyzer modules to be able to safely and/or efficiently operate until a predetermined time without maintenance. Also, in this case, optionally, other potential optimization objectives may not be optimized for, but may be taken into account by means of constraints. Alternatively, or in addition, optimization for two or more objectives is also possible.

As yet another example, the constraints may comprise, for one or more of the electrolyzer modules, a constraint defining the operating range of the respective electrolyzer module. This allows for tailoring the operation of the respective electrolyzer module to accommodate for operating parameters, for example efficiency, of components other than the electrolyzer stack(s) of the electrolyzer module, for example of the rectifier and/or the filter of the electrolyzer module.

In the present disclosure, the term degradation generally entails changes to the electrolyzer module's characteristics that are detrimental in one or more aspects. For example, the operational efficiency and/or safety may decrease and/or the range of operating points that allow for safe operation and/or efficient operation may decrease.

That the electrolyzer module set points are determined such that their sum equals a prescribed overall plant set point of the electrolyzer plant may entail that the plant set point is one of the constraints of the optimization procedure.

Some or all of the steps included in determining the electrolyzer module set points may be performed by the processing unit. Alternatively or in addition, the step of controlling operation of the electrolyzer modules may be performed partially or completely by means of the processing unit.

The processing unit may comprise a control device, also referred to as coordinating controller, that assigns the electrolyzer module set points to the electrolyzer modules so as to control their operation at the respective electrolyzer module set point. Alternatively, the system may comprise a control device that is external to the processing unit and configured to communicate with the processing unit.

Each of the electrolyzer modules may be configured to communicate with the control device. In particular, each electrolyzer module may be configured to receive control commands from the control device and operate in accordance with the control commands, particularly, operate at the set points assigned to them by the control device.

Each of the electrolyzer modules may comprise one or more electrolyzer stacks, which may each comprise a plurality of electrolyzer cells that split water and produces hydrogen, and may further comprise a rectifier to convert alternating current (AC) to direct current (DC) at a given setpoint or another suitable power electronic device. Each of the electrolyzer modules may further comprise a transformer that transforms alternating current to be input into the rectifier and/or a filter that may reduce DC current ripple in the DC current output by the rectifier and to be input into the electrolyzer stacks.

It is to be understood that during operation of the electrolyzer plant the prescribed overall plant set point may vary over time. Accordingly, the electrolyzer module set points may also vary over time. For example, an electrolyzer module may be switched on at an initial set point and subsequently its set point may be increased and/or decreased. The set point may also remain constant before, after and/or between increases or decreases of the set point. Determining of electrolyzer module set points may comprise, for each electrolyzer module, determining a time sequence of the electrolyzer module set points, in particular taking into account a time-dependency of the overall plant set point.

As an example, it is possible that electrolyzer module operation is started at different times for different electrolyzer modules and the electrolyzer module set point of each electrolyzer module may remain constant or may change over time. In particular, the overall plant set point as a function of time may be input into the control module and used in the optimization procedure. In other words, the optimization procedure may be performed to take into account changes in the overall plant set point.

The determining of the electrolyzer module set points may further comprise creating and/or updating an overall electrolyzer plant model on the basis of the data representative of operation characteristics of each of the plurality of electrolyzer modules and performing the optimization procedure on the basis of the electrolyzer plant model.

The overall electrolyzer plant model may be a model that is predictive of overall electrolyzer plant efficiency, overall plant lifetime, lifetime of each of each of the electrolyzer modules, operational safety, and/or maintenance patterns dependent on the individual operation characteristics of each of the plurality of electrolyzer modules and on their operation, particularly each of the individual electrolyzer module set points at which they are operated, and optionally dependent on other parameters, for example operating conditions like temperature and/or pressure. Thus, the overall electrolyzer plant model allows for modelling and/or predicting overall plant operation while taking into account each individual electrolyzer module and its specific individual operation characteristics.

The data representative of the operation characteristics of each of the plurality of electrolyzer modules may comprise data representative of efficiency characteristics of the electrolyzer module, in particular an efficiency curve of the electrolyzer module, and/or degradation characteristics, in particular a degradation curve, of the electrolyzer module. In other words, the degradation curve and the efficiency curve each characterize the operation of the electrolyzer modules. The data representative of the operation characteristics of each of the plurality of electrolyzer modules may further comprise their respective switching losses for turning them on and/or off.

The efficiency characteristics of the electrolyzer modules include the efficiency of hydrogen production from input power. They may comprise, for each of the electrolyzer modules, one or more isolated efficiency values for each of the electrolyzer modules, e.g. a mean efficiency and/or efficiency values at different operating points. Alternatively, they may comprise an efficiency curve for each of the electrolyzer modules, the efficiency curve, which representing the dependency of the electrolyzer module efficiency as a function of the operating point. The operating point may be given as percentage of nominal load.

The efficiency curves of some of the plurality of electrolyzer modules may vary by efficiency value of the respective electrolyzer module at any given operating point, the operating range of the electrolyzer module, e.g., different maximum or minimum operating point, and/or the shape of the curve, which may vary, for example, due to different reactions of an electrolyzer module to the rectifier ripple factor at different loads.

The degradation characteristics, particularly the degradation curve, represent the change of other electrolyzer module characteristics, like efficiency characteristics, safety characteristics and/or structural characteristics, over time due to degradation. The degradation curve of each of the electrolyzer modules may, for example, be obtained by inputting parameters characterizing the respective electrolyzer module into a degradation model. The parameters may include nominal parameters, e.g., taken from the specification of each of the electrolyzer modules, and/or parameters obtained by means of measurements. Alternatively or in addition, the parameters may also include parameters characterizing the past and/or expected operating conditions of the electrolyzer module.

As an example, based on the efficiency and/or degradation curves, the system may determine the electrolyzer set points most beneficial in terms of electrolyzer plant efficiency and/or reduction of electrolyzer and/or plant degradation.

The efficiency curves and/or degradation curves of each of the module may be used to obtain the overall electrolyzer plant model. For example, efficiency curves and/or degradation curves may be input into a modelling engine that outputs the electrolyzer plant model. The modelling engine may be configured to aggregate the efficiency curves and/or degradation curves and optionally additional data representative of electrolyzer plant and/or electrolyzer module characteristics to obtain an aggregate data set used to determine the electrolyzer plant model. Alternatively or in addition, the efficiency curves and/or degradation curves of each of the module may be used to update an existing overall electrolyzer plant model. For example, if an electrolyzer module is exchanged and/or added and/or removed and/or other electrolyzer plant and/or electrolyzer module characteristics change, the modelling engine may be configured to update a previously created electrolyzer plant model. To that end, in the aggregated data set, efficiency and/or degradation curves may be added and/or exchanged and/or removed, and/or data representative of other electrolyzer plant and/or electrolyzer module characteristics may be added, removed, and/or changed in the aggregate data set.

As briefly mentioned above, the efficiency characteristics, particularly the efficiency curve of each of the electrolyzer modules may be time-dependent. In other words, the efficiency curve may change over the time. Such changes may be due to operating conditions, environmental conditions, and/or degradation of the electrolyzer module, for example. The system may be configured to take into account, in the optimization procedure, said time-dependence of the efficiency curve, in particular, changes due to degradation.

In particular, the system may be configured to update efficiency curves to be used for determining the set points. The system may be configured to perform the updating automatically, for example at regular intervals or in response to a trigger event, e.g. in response to receiving a control command. The updating may be based on known design data, particularly spanning from beginning of life to end of life of an electrolyzer module and the effect of operation on the degradation.

The system may be configured to determine the change of the efficiency curve over time for the each of the electrolyzer modules. In particular, it may be configured to predict a future change of the efficiency curve. In other words, the system may be configured to provide a projection of the change of the efficiency curve. In particular, the change over time of the electrolyzer modules may be determined by analyzing trends of the efficiency curves from past times. As an example, the trends may be extrapolated to predict a future change of the efficiency curve.

Optionally, the extrapolations for each of the electrolyzer modules may be used in obtaining the above-mentioned electrolyzer plant model.

The optimization procedure may take into account, in particular exploit, differences between the efficiency curves of the electrolyzer modules and/or differences between the degradation curves of the electrolyzer modules, in particular one or more of different maximum efficiencies of the efficiency curves, different shapes of the efficiency curves, different time-dependencies of the efficiency curves, and different operating ranges of the electrolyzer modules, and optionally corresponding efficiencies within said operating ranges of the electrolyzer modules.

One or more of these differences may be used in obtaining the overall electrolyzer plant model. The above allows for optimal use of each of the electrolyzer modules exploiting their individual operating characteristics.

The above-described optimization procedure may comprise an optimization for maintenance patterns by setting constraints, also referred to as boundary conditions, representative of a predetermined maintenance schedule.

The maintenance schedule may be data set that assigns specific times or time windows for performing maintenance work on one or more of the electrolyzer modules. For example, the maintenance schedule may ensure that maintenance can be performed at times of low production demand and/or that maintenance times of the electrolyzer modules are distributed over time in such a manner that at any given time the required production rate of the plant can be met, specifically, distributing the maintenance times evenly over time, and/or that maintenance of several of the electrolyzer modules is clustered to a common time and/or event. The latter reduces maintenance overhead costs.

As already mentioned above, the optimization procedure may comprise an optimization for maintenance patterns. Alternatively or in addition, the optimization may use constraints representative of a predetermined maintenance schedule. Thus, the system may be configured to control the operation of the electrolyzer modules in such a manner that a predetermined maintenance schedule can be adhered to. This may be done on the basis of the degradation characteristics, in particular degradation curves, of each of the electrolyzer modules. Thus, operation of the electrolyzer modules may be controlled in such a manner that a predetermined maintenance pattern, which allows for adhering to the maintenance schedule, is obtained.

The above-mentioned constraints representative of a predetermined maintenance schedule may include that one or more predicted characteristics of the electrolyzer modules, in particular predicted operation characteristics, remain within a certain range at least until a predetermined time, in particular, that a predicted efficiency of the electrolyzer module remain above a predetermined efficiency threshold at least until a predetermined time and/or that a predicted value for characteristics representative of operational safety of the electrolyzer module remain within a predetermined range until a predetermined time.

The predetermined time may be the intended maintenance time or beginning of an intended maintenance time window for the respective electrolyzer module, for example.

In particular, the constraints may include that values representing characteristics of the electrolyzer modules, also referred to as electrolyzer module characteristics, in particular operation characteristics, exceed and/or stay below one or more predetermined thresholds. For example, the operation time may represent electrolyzer module characteristics. The threshold for the overall electrolyzer module operation time may be determined from a correlation between the operation time and the electrolyzer module characteristics. Alternatively or in addition, the values representing electrolyzer module characteristics may be values obtained by one or more sensors.

The optimization procedure may be performed with the constraint that each electrolyzer module stays above or below a predetermined safety threshold. As an example, the optimization procedure may be performed with the constraint that degradation of each electrolyzer module's membrane may not exceed a critical value. This may be achieved by using the constraint that overall operation time of the electrolyzer module remain below a predetermined threshold or that a measured value indicative of membrane degradation remain above or below a predetermined threshold. Alternatively and/or in addition, as an example, deviation from the maximally degraded conditions at the scheduled maintenance can be added as penalty to the optimization procedure objective.

The system may be configured to determine the electrolyzer module set points in accordance with an operation mode, in particular an operation mode selected among a plurality of operation modes automatically and/or in response to a user input, wherein the operation mode is one of maximum overall electrolyzer plant efficiency, which may be referred to as an efficiency mode, minimum degradation of each of the electrolyzer modules, which may be referred to as an extended lifetime mode, and adherence to a maintenance schedule, which may also be referred to as maintenance compliance mode, or a combination of at least two of said operation modes.

An example for a combination of at least two of said operation modes is a mode that minimizes a convex combination of degradation rate of the electrolyzer modules and negative efficiency, i.e., combines the efficiency and extended lifetime modes. This mode may be referred to as an economic mode.

In an efficiency mode, efficiency may be maximized at the expense of lifetime of one or more of the electrolyzer modules, as maximizing efficiency may entail accelerated degradation. In extended lifetime mode the degradation rate may be minimized at the expense of efficiency. Economic mode allows for optimally accommodating the desire to extend lifetime and improve efficiency. In other words, the different operation modes provide varying efficiency/lifetime compromises.

It is also possible to provide an operation mode that accommodates a desired maintenance schedule or pattern, optionally in combination with other objectives like optimizing for overall electrolyzer plant efficiency and/or electrolyzer module lifetime.

The system may comprise a control device configured to control the operation of the plurality of electrolyzer modules using the control commands, in particular the control device mentioned above. In particular, the control device may have a communication interface configured so as to allow for communication between the electrolyzer modules and the control device. The control device may be included in the processing unit it may be external to the processing unit and configured to communicate with the processing unit.

Thus, the system may be configured to provide coordinated control of the operation of the electrolyzer modules by means of the control device, in particular, by providing the control commands to the electrolyzer modules via the communication interface.

The system may further comprise an ERP system configured to provide production information, for example hydrogen demand, which production information may be forecasts from a production schedule, and/or maintenance information, e.g., a maintenance schedule, to the control device. Alternatively or in addition, the ERP system may be configured to update the production information and/or maintenance information, in particular in response to receiving information pertaining to the electrolyzer modules from the control device.

The production information and/or the maintenance information may be provided in accordance with a push or a pull scheme. As an example of a pull scheme, the information may be provided in response to a query sent from the control device to the ERP system. As an example of a push scheme, the ERP system may continuously or at intervals provide the information to the control device.

The control device may be configured to provide information pertaining to the electrolyzer modules, in particular degradation information, for example degradation status and/or degradation rate of the electrolyzer modules. Data available to, for example stored at or accessible for, the ERP system may be updated with the information pertaining to the electrolyzer modules. The ERP system may be configured to use the information pertaining to the electrolyzer modules received from the control device for maintenance planning and/or production planning and/or improved logistics. A conventional ERP system may be used and adapted so as to be configured as outlined above. Combining the controller and the ERP system described above allows for providing a fully integrated solution.

It is noted that each of the above-described systems may be configured to perform the determining of the electrolyzer module set points discontinuously, in particular in response to a user input, or automatically at predetermined times. For example, the electrolyzer module set points or sequence of electrolyzer module set points for each of the electrolyzer modules may be determined for an upcoming time period. A controller may then control operation of the electrolyzer modules during this time period on the basis of the previously determined electrolyzer module set points or sequence of electrolyzer module set points. Alternatively, the system may be configured to determine the electrolyzer module set points continuously during operation of the electrolyzer modules. In this case, the determining may be performed taking into account data on current operating conditions obtained by monitoring the operation, for example by means of one or more sensors. Such a configuration allows for more flexibility in terms of optimizing the set points, thereby further improving the overall electrolyzer plant operation.

The invention also provides a use of a system for any of the electrolyzer plants described above, the system comprising a processing unit and configured to determine, for each of a plurality of electrolyzer modules, an electrolyzer module set point at which the electrolyzer module is to be operated, wherein the electrolyzer module set points are determined such that their sum equals a prescribed overall plant set point of the electrolyzer plant, and, in particular, to control operation of each of the plurality of electrolyzer modules at the respective electrolyzer module set point. The determining comprises inputting data representative of operation characteristics of each of the plurality of electrolyzer modules into the processing unit and the processing unit performing an optimization procedure that outputs the electrolyzer module set points, the optimization procedure comprising an optimization for one or more of overall electrolyzer plant efficiency, electrolyzer plant lifetime, lifetime of each of each of the electrolyzer modules, operational safety, and maintenance patterns.

The invention also provides a computer-readable medium comprising instructions which, when executed by a computer, cause the computer to determine, for each of a plurality of electrolyzer modules of an electrolyzer plant, an electrolyzer module set point at which the electrolyzer module is to be operated, wherein the electrolyzer module set points are determined such that their sum equals a prescribed overall plant set point of the electrolyzer plant, and, in particular, to provide control signals for controlling operation of each of the plurality of electrolyzer modules at the respective electrolyzer module set point. The determining comprises inputting data representative of operation characteristics of each of the plurality of electrolyzer modules into a processing unit and the processing unit performing an optimization procedure that outputs the electrolyzer module set points, the optimization procedure comprising an optimization for one or more of overall electrolyzer plant efficiency, overall plant lifetime, lifetime of each of each of the electrolyzer modules, operational safety, and maintenance patterns.

The invention also provides a computer program product comprising instructions which, when the program is executed by a computer, cause the computer to determine, for each of a plurality of electrolyzer modules of an electrolyzer plant, an electrolyzer module set point at which the electrolyzer module is to be operated, wherein the electrolyzer module set points are determined such that their sum equals a prescribed overall plant set point of the electrolyzer plant, and, in particular, to provide control signals for controlling operation of each of the plurality of electrolyzer modules at the respective electrolyzer module set point. The determining comprises inputting data representative of operation characteristics of each of the plurality of electrolyzer modules into a processing unit and the processing unit performing an optimization procedure that outputs the electrolyzer module set points, the optimization procedure comprising an optimization for one or more of overall electrolyzer plant efficiency, overall plant lifetime, lifetime of each of each of the electrolyzer modules, operational safety, and maintenance patterns.

The invention also provides a method for controlling operation of an electrolyzer plant comprising a plurality of electrolyzer modules. The method comprises determining, for each of the plurality of electrolyzer modules, an electrolyzer module set point at which the electrolyzer module is to be operated, wherein the electrolyzer module set points are determined such that their sum equals a prescribed overall plant set point of the electrolyzer plant, and controlling operation of each of the plurality of electrolyzer modules at the respective electrolyzer module set point. The determining comprises inputting data representative of operation characteristics of each of the plurality of electrolyzer modules into a processing unit and the processing unit performing an optimization procedure that outputs the electrolyzer module set points, the optimization procedure comprising an optimization for one or more of overall electrolyzer plant efficiency, overall plant lifetime, lifetime of each of each of the electrolyzer modules, operational safety, and maintenance patterns.

The determining of the electrolyzer module set points may further comprise creating and/or updating an overall electrolyzer plant model on the basis of the data representative of operation characteristics of each of the plurality of electrolyzer modules and performing the optimization procedure on the basis of the electrolyzer plant model.

The electrolyzer module set points may be determined discontinuously, particularly in response to a user input, and/or automatically at predetermined times, or continuously during operation of the electrolyzer modules.

The data representative of the operation characteristics of each of the plurality of electrolyzer modules may comprise data representative of efficiency characteristics of the electrolyzer module, in particular an efficiency curve of the electrolyzer module, and/or degradation characteristics, in particular a degradation curve, of the electrolyzer module. In particular, the optimization procedure may take into account, in particular exploit, differences between the efficiency curves of the electrolyzer modules and/or differences between the degradation curves of the electrolyzer modules, in particular one or more of different maximum efficiencies of the efficiency curves, different shapes of the efficiency curves, different operating ranges of the electrolyzer modules and corresponding efficiencies within said operating ranges, and different time-dependencies of the efficiency curves.

The above-described optimization procedure may take into account, in particular exploit, differences between the efficiency curves of the electrolyzer modules and/or differences between the degradation curves of the electrolyzer modules, in particular one or more of different maximum efficiencies of the efficiency curves, different shapes of the efficiency curves, different time-dependencies of the efficiency curves, and different operating ranges of the electrolyzer modules, and optionally corresponding efficiencies within said operating ranges of the electrolyzer modules.

The above-described optimization procedure may comprise an optimization for maintenance patterns by setting constraints representative of a predetermined maintenance schedule, in particular, wherein the constraints include that one or more predicted characteristics of the electrolyzer modules, in particular predicted operation characteristics, remain within a certain range at least until a predetermined time, in particular, that a predicted efficiency of the electrolyzer module remain above a predetermined efficiency threshold at least until a predetermined time and/or that a predicted value for characteristics representative of operational safety of the electrolyzer module remain within a predetermined range until a predetermined time.

In the above methods, the electrolyzer module set points may be determined in accordance with an operation mode, in particular an operation mode selected among a plurality of operation modes automatically and/or in response to a user input, wherein the operation mode is one of maximum overall electrolyzer plant efficiency, minimum degradation of each of the electrolyzer modules, and adherence to a maintenance schedule, which may also be referred to as maintenance compliance mode, or a combination of at least two of said operation modes.

The features and advantages outlined above in the context of the systems similarly apply to the use of the system, the computer-readable medium, the computer program product and the use of the processing unit, and the methods described herein.

Further features, examples, and advantages will become apparent from the detailed description making reference to the accompanying drawings.

### BRIEF DESCRIPTION OF THE DRAWINGS

In the accompanying drawings,
Figure 1 illustrates a schematic representation not to scale of an electrolyzer plant;
Figure 2 illustrates a schematic representation not to scale of an electrolyzer module;
Figure 3 illustrates an exemplary efficiency curve of an electrolyzer module;
Figure 4 illustrates an exemplary degradation curve of an electrolyzer module;
Figure 5 illustrates an exemplary required overall production curve of an electrolyzer plant;
Figures 6a and 6b illustrate a schematic representation of coordinated operation of the electrolyzer modules according to a first scenario and exemplary efficiency curves of a plurality of electrolyzer modules; and
Figures 7a and 7b illustrate a schematic representation of coordinated operation of the electrolyzer modules according to a second scenario and exemplary efficiency curves of a plurality of electrolyzer modules.

### DETAILED DESCRIPTION

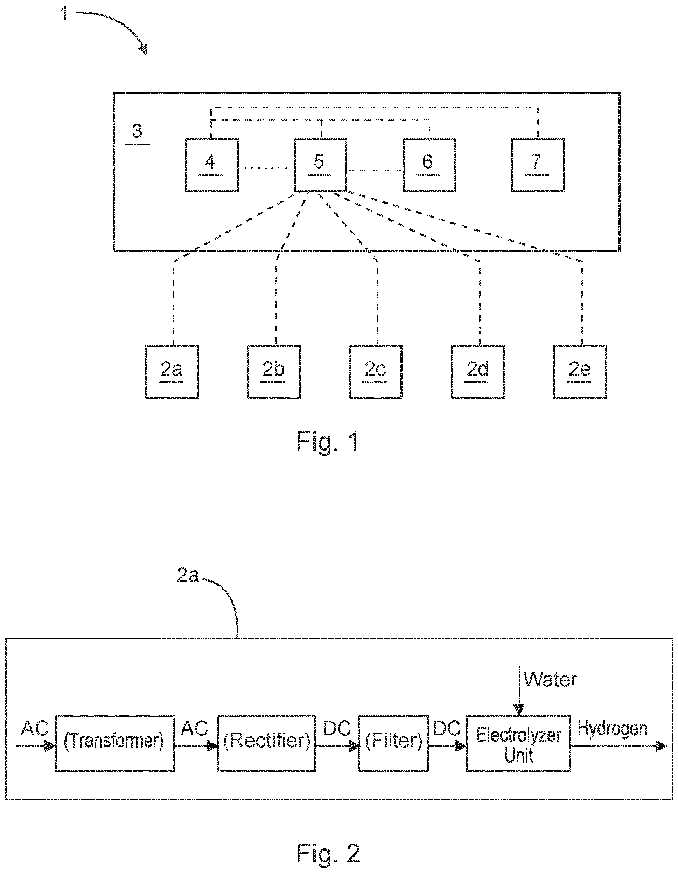

Figure 1 illustrates a schematic representation not to scale of an electrolyzer plant 1. The electrolyzer plant comprises a plurality of electrolyzer modules, in the present case, by means of example only, five electrolyzer modules 2a, 2b, 2c, 2d, and 2e.

Furthermore, the electrolyzer plant comprises a system 3 for controlling operation of the electrolyzer plant. The system itself is shown as having a processing unit 4 and a control device 5, which are connected to each other. It may optionally further comprise an ERP system 6, which is shown as being connected to the control device 5 and the processing unit 4 in this example, as indicated by the dashed lines. However, it may alternatively only be connected to the control device or the processing unit. The system may optionally comprise or be connected to a user input terminal 7 that receives user input. As shown in this example, the control device may be external to the processing unit and configured to communicate with the processing unit and/or the control device, as indicated by the dashed lines. Alternatively, the control device may be part of the processing unit.

As described above, the system may be configured to determine the electrolyzer module set points in accordance with an operation mode. In particular, the system may be configured such that the operation mode can be changed, for example automatically or in response to receiving user input, for example via the user input terminal.

The system 3 is configured to control the operation of the electrolyzer plant, in particular, to perform coordinated control of the electrolyzer modules. In this example, the coordinated control may be performed by means of the control device 5, which can communicate with the electrolyzer modules as indicated by the dashed lines. The control device may be configured, for example, to provide control signals to the electrolyzer modules to control their operation.

The system controls the operation of each of the plurality of electrolyzer modules at a respective electrolyzer module set point. The sum of the electrolyzer module set points equals the overall plant set point.

The system is configured to determine the electrolyzer module set points. This determining comprises that data representative of operation characteristics, for example the operation characteristics described above like efficiency and/or degradation characteristics, of the electrolyzer modules is input into the processing unit. The processing unit is configured to perform an optimization procedure, using at least some of the data representative of the operation characteristics. The optimization procedure outputs the electrolyzer module set points. It comprises an optimization for one or more of overall electrolyzer plant efficiency, electrolyzer plant lifetime, lifetime of each of each of the electrolyzer modules, operational safety, and maintenance patterns. In one non-limiting example, the system may be configured to create and/or update an overall electrolyzer plant model on the basis of the data representative of operation characteristics. In that case, the optimization procedure may be performed on the basis of the electrolyzer plant model.

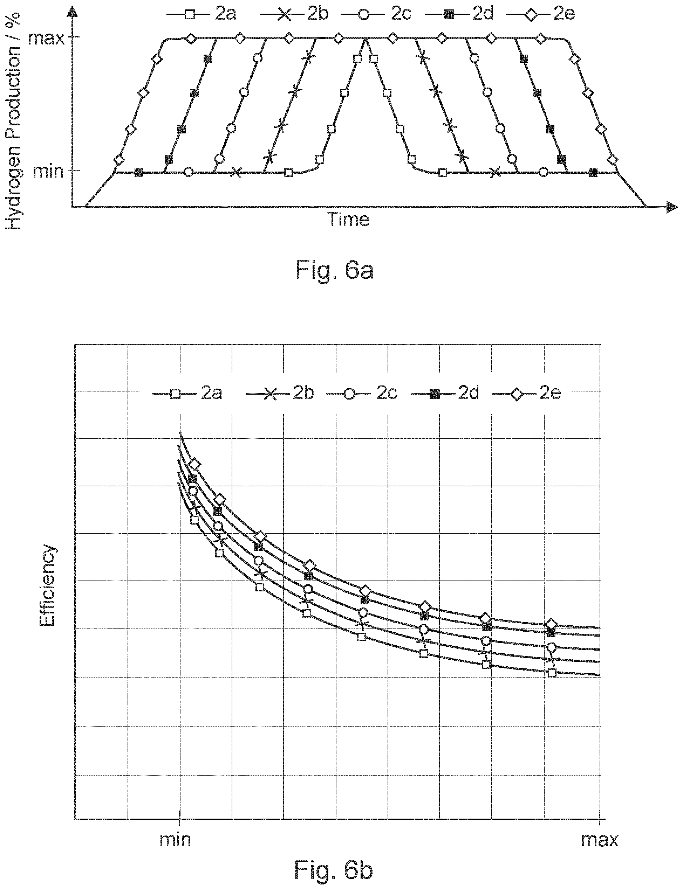

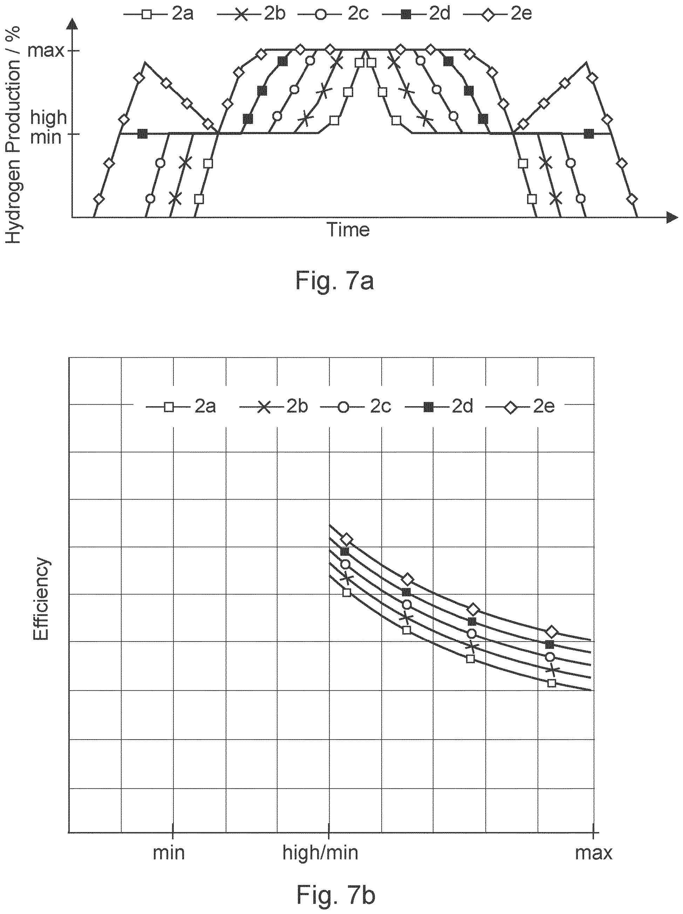

The electrolyzer modules may differ in their operation characteristics and the optimization procedure may take into account, potentially even exploit, such differences. Examples in this regard will be described in more detail with respect to Figures 6a, 6b, 7a, and 7b.

As described above, the system may be configured to perform the optimization procedure in accordance to different modes, particularly a mode selected in response to a user input, and/or it may be configured to perform the determination of the set points automatically or in response to a user input. The user input may be received via the input terminal.

The ERP system, if any, may be configured to provide production information and/or maintenance information to the control device, for example, in response to receiving information pertaining to the electrolyzer modules from the control device. The information may be exchanged via a data connection indicated by a dashed line.

The invention provides a method for controlling the operation of an electrolyzer plant having a plurality of electrolyzer modules, for example the electrolyzer plant described above.

As an example, the method comprises determining, for each of the plurality of electrolyzer modules, an electrolyzer module set point at which the electrolyzer module is to be operated. As described above, the electrolyzer module set points are determined such that their sum equals a prescribed overall plant set point of the electrolyzer plant. The method further comprises controlling, for example by means of a control device, the operation of each of the plurality of electrolyzer modules at the respective electrolyzer module set point.

The determining of the electrolyzer module set points comprises inputting data representative of operation characteristics of each of the plurality of electrolyzer modules, for example efficiency and/or degradation curves, into a processing unit, for example the processing unit described above. The determining further comprises that the processing unit performs an optimization procedure that outputs the electrolyzer module set points. The optimization procedure comprises an optimization for one or more of overall electrolyzer plant efficiency, overall plant lifetime, lifetime of each of each of the electrolyzer modules, operational safety, and maintenance patterns. As explained above, an overall plant model may be used for the optimization procedure.

The invention also provides the use of a system for an electrolyzer plant, for example the system for controlling operation of an electrolyzer plant as described above, the system configured to determine the electrolyzer module set points including inputting the operation characteristics of the electrolyzer modules into a processing unit, for example the processing unit described above, and performing an optimization procedure, for example the optimization procedure described above, that outputs the electrolyzer module set points and includes an optimization for one or more of overall electrolyzer plant efficiency, electrolyzer plant lifetime, lifetime of each of each of the electrolyzer modules, operational safety, and maintenance patterns.

The invention also provides a computer readable medium and a computer program product, each comprising instructions that, when executed on a computer, control the computer to determine the electrolyzer module set points including inputting the operation characteristics of the electrolyzer modules into a processing unit, for example the processing unit described above, and performing an optimization procedure, for example the optimization procedure described above, that outputs the electrolyzer module set points and includes an optimization for one or more of overall electrolyzer plant efficiency, electrolyzer plant lifetime, lifetime of each of each of the electrolyzer modules, operational safety, and maintenance patterns.

Figure 2 illustrates a schematic representation not to scale of an exemplary electrolyzer module 2a, which may be used in the electrolyzer plant according to the present invention, particularly the plant as shown in Figure 1. The electrolyzer module comprises one or more electrolyzer stacks, each comprising a plurality of electrolyzer cells, and may comprise a rectifier or another suitable power electronic device. The exemplary electrolyzer module of Figure 2 also includes an optional transformer and an optional filter. Each of the electrolyzer modules of the electrolyzer plant may be configured likewise.

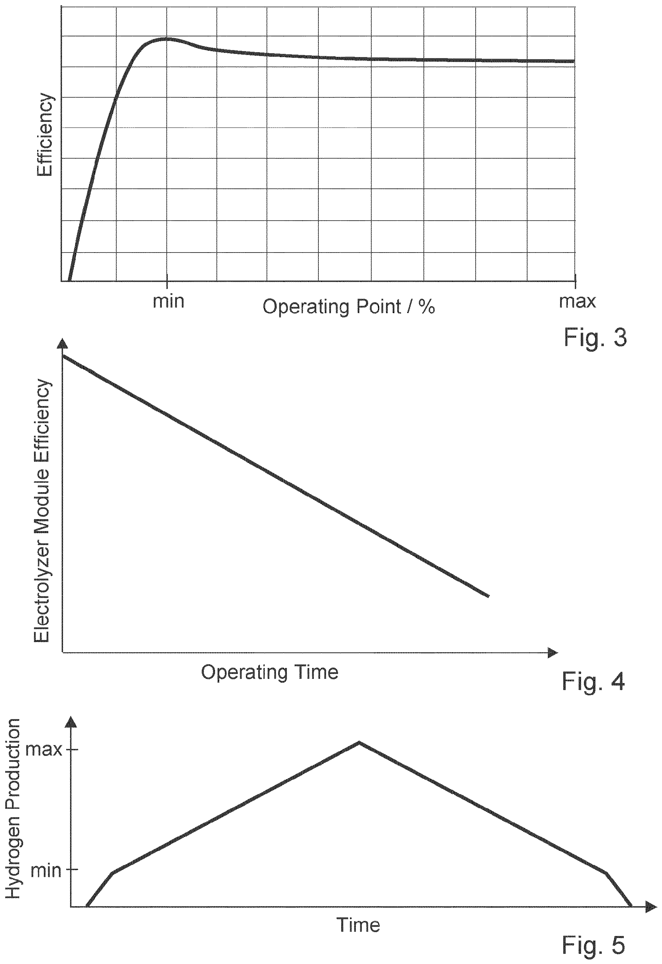

As an example only, Figure 3 illustrates an exemplary efficiency curve of an electrolyzer module. The efficiency curve represents the efficiency of the electrolyzer module as a function of the operating point, which is given as a percentage of the nominal load. In Figure 3, the nominal minimum and maximum operating points are indicated by "min" and "max". The nominal minimum and maximum operating points are the boundaries of the nominal operating range of the electrolyzer module. In the example shown in Figure 3, within this range, the efficiency shows relatively little change as compared to outside this range, particularly below the minimum operating point. In the example shown in Figure 3, the efficiency is higher at the minimum operating point than at any other operating point within the operating range, i.e., within the operating range efficiency decreases with increasing operating point.

The efficiency curve may change over time. At least part of it may be shifted and/or its shape may change. For example, at least part of the efficiency curve may be shifted towards lower efficiencies due to degradation. When maintenance is performed on the electrolyzer module, this may change the efficiency curve towards higher efficiencies.

As an example only, Figure 4 illustrates an exemplary degradation curve of an electrolyzer module. The degradation curve of this example represents the change of the electrolyzer module efficiency over time. In this case, for sake of example only, a linear degradation curve is shown. Depending on the use of the electrolyzer modules, a linear degradation curve may sufficiently approximate the actual degradation. However, a degradation curve that is an even better approximation may be used. This may entail providing a model for the degradation, for example taking into account operation conditions, and/or supplementing a theoretical prediction of the degradation curve with measurement values obtained for the respective electrolyzer module.

As an example only, Figure 5 illustrates an exemplary required overall production curve ranging from zero through minimum to maximum production. The system of the invention is configured to control operation of the electrolyzer modules such that together they meet the overall production requirements. Two scenarios for the distribution among the electrolyzer modules so as to obtain the required overall production, for example the overall production as shown in Figure 5, are explained in detail below. However, the required overall production curve and the examples below are for sake of illustration only and the invention is not limited to these specific examples.

Figures 6a and 6b and 7a and 7b illustrate two exemplary operation scenarios for an electrolyzer plant having a plurality of electrolyzer modules with different efficiencies. Additional or other operation scenarios may also be provided.

For illustrative purposes, the electrolyzer plant in the two exemplary operation scenarios comprises five electrolyzer modules, each having a different efficiency, as illustrated in Figure 6b for the first scenario and in Figure 7b for the second scenario. However, the invention is not limited to this number of electrolyzer modules. That is, the electrolyzer plant may have fewer or more than five electrolyzer modules.

In each of the exemplary operation scenarios, the operation of the electrolyzer modules is coordinated such that the sum of the production of all modules accounts for the overall production as represented by the overall production curve in Figure 5.

The first operation scenario as shown in Figure 6a is a scenario where the nominal minimum operating point, also referred to as minimum production, for the individual electrolyzer modules is relatively low. Thus, their operation can be performed making use of the high efficiency of each of the modules at minimum production. As can be seen in the efficiency curves shown in Figure 6b, the efficiency of each of the modules may be highest at minimum load.

In this scenario, as an example, when performing the optimization procedure with an optimizing step for overall plant efficiency, it results in controlling the electrolyzer modules such that all modules are turned on initially. As the overall electrolyzer plant set point increases, the set points of the electrolyzer modules, and accordingly the hydrogen production of each of the electrolyzer modules, are increased successively in the order of their individual efficiencies, starting with the electrolyzer module having the highest efficiency. Accordingly, in this example, first the set point of electrolyzer module 2e is increased and the set point of electrolyzer modules 2d, 2c, 2b, and 2a are successively increased in this order.

The order depends on individual efficiency curves of electrolyzer modules, for example the actual or predicted efficiency curve at the time of operation or an efficiency curve as provided by the specification of the respective electrolyzer module. It is noted that, as seen above, the efficiency curves may change over time, depending, for example, on the electrolyzer module degradation, which in turn may depend on its lifetime, usage pattern, and maintenance status. Thus at a later point in time the operation of the electrolyzer modules may differ from the one shown in Figure 6a. Changing the operation as a function of time may be performed automatically.

In the scenario depicted in Figures 7a and 7b, the efficiency curves of the electrolyzer modules differ from those in the first scenario in that the nominal minimum operating point for all modules is higher than in the first scenario, as can be seen in Figure 7b. In the present examples, this means that the operating range of each of the modules is smaller than in the first scenario.

As shown in Figure 7a, in this scenario, as an example, when performing the optimization procedure with an optimizing step for overall plant efficiency, it results in controlling the electrolyzer modules such that only two of the five modules, in this example modules 2e and 2d having the highest efficiency, are turned on initially. This number of modules being initially turned on is merely an illustrative example and may differ depending on the optimization procedure. After turning on the two modules, the set point of at least one of the two modules may be increased. In this example, the set point, and accordingly the hydrogen production, of electrolyzer module 2e having the highest efficiency is increased until the minimum capacity of an additional electrolyzer module is needed to match the overall production curve shown in Figure 5.

The remaining electrolyzer modules are successively turned on with further increasing total load in order of efficiency of the respective module, starting with the one having the highest efficiency.

The load of electrolyzer module 2e is decreased as additional electrolyzer modules are turned on to match the overall production curve. Finally, the individual loads of running electrolyzer modules are increased in the order of their efficiency, again starting with the module having the highest efficiency. As the efficiencies change with the operating point, it is sometimes beneficial to increase the set point of multiple electrolyzer modules at the same time.

In the examples described above, each electrolyzer module has a different efficiency. However, this is for sake of illustration only and efficiencies may differ from those of the above examples. For example, a sub-group of the electrolyzer modules may have the same efficiency, rather than all being different. Moreover, the shapes of the efficiency curves are merely illustrative and may differ.

## Claims

1. An electrolyzer plant (1) comprising a plurality of electrolyzer modules (2a, 2b, 2c, 2d, 2e) and a system (3) for controlling operation of the electrolyzer plant (1), the system comprising a processing unit (4) and configured to:
determine, for each of the plurality of electrolyzer modules (2a, 2b, 2c, 2d, 2e), an electrolyzer module set point at which the electrolyzer module (2a, 2b, 2c, 2d, 2e) is to be operated, wherein the electrolyzer module set points are determined such that their sum equals a prescribed overall plant set point of the electrolyzer plant (1), and
control operation of each of the plurality of electrolyzer modules (2a, 2b, 2c, 2d, 2e) at the respective electrolyzer module set point,
wherein the determining comprises inputting data representative of operation characteristics of each of the plurality of electrolyzer modules (2a, 2b, 2c, 2d, 2e) into the processing unit and the processing unit performing an optimization procedure that outputs the electrolyzer module set points, the optimization procedure comprising an optimization for one or more of overall electrolyzer plant efficiency, electrolyzer plant lifetime, lifetime of each of the electrolyzer modules (2a, 2b, 2c, 2d, 2e), operational safety, and maintenance patterns.

2. The electrolyzer plant (1) of claim 1, wherein the determining further comprises creating and/or updating an overall electrolyzer plant model on the basis of the data representative of operation characteristics of each of the plurality of electrolyzer modules (2a, 2b, 2c, 2d, 2e) and performing the optimization procedure on the basis of the electrolyzer plant model.

3. The electrolyzer plant (1) of claim 1 or 2, wherein the data representative of the operation characteristics of each of the plurality of electrolyzer modules (2a, 2b, 2c, 2d, 2e) comprises data representative of efficiency characteristics, in particular an efficiency curve, of the electrolyzer module (2a, 2b, 2c, 2d, 2e) and/or degradation characteristics, in particular a degradation curve, of the electrolyzer module (2a, 2b, 2c, 2d, 2e).

4. The electrolyzer plant (1) of claim 3, wherein the optimization procedure takes into account, in particular exploits, differences between the efficiency curves of the electrolyzer modules (2a, 2b, 2c, 2d, 2e) and/or differences between the degradation curves of the electrolyzer modules (2a, 2b, 2c, 2d, 2e), in particular one or more of different maximum efficiencies of the efficiency curves, different shapes of the efficiency curves, different time-dependencies of the efficiency curves, and different operating ranges of the electrolyzer modules (2a, 2b, 2c, 2d, 2e), and optionally corresponding efficiencies within said operating ranges of the electrolyzer modules (2a, 2b, 2c, 2d, 2e).

5. The electrolyzer plant (1) of any of the preceding claims, wherein the optimization procedure comprises optimization for maintenance patterns by setting constraints representative of a predetermined maintenance schedule, in particular, wherein the constraints include that one or more predicted characteristics of the electrolyzer modules (2a, 2b, 2c, 2d, 2e), in particular predicted operation characteristics, remain within a certain range at least until a predetermined time, in particular, that a predicted value for characteristics representative of the operational safety of each of the electrolyzer modules (2a, 2b, 2c, 2d, 2e) remain within a predetermined range until a predetermined time and/or that a predicted efficiency of each of the electrolyzer modules (2a, 2b, 2c, 2d, 2e) remain above a predetermined efficiency threshold at least until a predetermined time.

6. The electrolyzer plant (1) of any of the preceding claims, wherein the system (3) is configured to determine the electrolyzer module set points in accordance with an operation mode, in particular an operation mode selected among a plurality of operation modes automatically and/or in response to a user input, wherein the operation mode is one of maximum overall electrolyzer plant efficiency, which may be referred to as an efficiency mode, minimum degradation of each of the electrolyzer modules (2a, 2b, 2c, 2d, 2e), which may be referred to as an extended-lifetime mode, and adherence to a maintenance schedule, which may also be referred to as maintenance compliance mode, or a combination of at least two of said operation modes.

7. The electrolyzer plant (1) of any of the preceding claims, wherein the system (3) comprises a control device (5) configured to control the operation of the plurality of electrolyzer modules (2a, 2b, 2c, 2d, 2e) using the control commands,
in particular, wherein the system further comprises an ERP system (6) configured to provide production information and/or maintenance information to the control device (5) and/or update production information and/or maintenance information, in particular in response to receiving information pertaining to the electrolyzer modules (2a, 2b, 2c, 2d, 2e) from the control device (5).

8. The electrolyzer plant (1) according to any of the preceding claims, wherein the system (3) is configured to perform the determining of the electrolyzer module set points discontinuously, in particular in response to a user input, or automatically at predetermined times, or continuously during operation of the electrolyzer modules (2a, 2b, 2c, 2d, 2e).

9. A use of a system (3) for controlling an electrolyzer plant (1) comprising a plurality of electrolyzer modules (2a, 2b, 2c, 2d, 2e), particularly an electrolyzer plant according to any one of the preceding claims, the system (3) comprising a processing unit (4) and configured to:
determine, for each of the plurality of electrolyzer modules (2a, 2b, 2c, 2d, 2e), an electrolyzer module set point at which the electrolyzer module (2a, 2b, 2c, 2d, 2e) is to be operated, wherein the electrolyzer module set points are determined such that their sum equals a prescribed overall plant set point of the electrolyzer plant (1), and in particular, to control operation of each of the plurality of electrolyzer modules (2a, 2b, 2c, 2d, 2e) at the respective electrolyzer module set point,
wherein the determining comprises inputting data representative of operation characteristics of each of the plurality of electrolyzer modules (2a, 2b, 2c, 2d, 2e) into the processing unit and the processing unit performing an optimization procedure that outputs the electrolyzer module set points, the optimization procedure comprising an optimization for one or more of overall electrolyzer plant efficiency, electrolyzer plant lifetime, lifetime of each of each of the electrolyzer modules (2a, 2b, 2c, 2d, 2e), operational safety, and maintenance patterns.

10. A computer-readable medium comprising instructions which, when executed by a computer, cause the computer to:
determine, for each of a plurality of electrolyzer modules (2a, 2b, 2c, 2d, 2e) of an electrolyzer plant (1), an electrolyzer module set point at which the electrolyzer module (2a, 2b, 2c, 2d, 2e) is to be operated, wherein the electrolyzer module set points are determined such that their sum equals a prescribed overall plant set point of the electrolyzer plant (1), and, in particular, to provide control signals for controlling operation of each of the plurality of electrolyzer modules (2a, 2b, 2c, 2d, 2e) at the respective electrolyzer module set point,
wherein the determining comprises inputting data representative of operation characteristics of each of the plurality of electrolyzer modules (2a, 2b, 2c, 2d, 2e) into a processing unit and the processing unit performing an optimization procedure that outputs the electrolyzer module set points, the optimization procedure comprising an optimization for one or more of overall electrolyzer plant efficiency, overall plant lifetime, lifetime of each of each of the electrolyzer modules (2a, 2b, 2c, 2d, 2e), operational safety, and maintenance patterns.

11. A computer program product comprising instructions which, when the program is executed by a computer, cause the computer to:
determine, for each of a plurality of electrolyzer modules (2a, 2b, 2c, 2d, 2e) of an electrolyzer plant (1), an electrolyzer module set point at which the electrolyzer module (2a, 2b, 2c, 2d, 2e) is to be operated, wherein the electrolyzer module set points are determined such that their sum equals a prescribed overall plant set point of the electrolyzer plant (1), and, in particular, to provide control signals for controlling operation of each of the plurality of electrolyzer modules (2a, 2b, 2c, 2d, 2e) at the respective electrolyzer module set point,
wherein the determining comprises inputting data representative of operation characteristics of each of the plurality of electrolyzer modules (2a, 2b, 2c, 2d, 2e) into a processing unit and the processing unit performing an optimization procedure that outputs the electrolyzer module set points, the optimization procedure comprising an optimization for one or more of overall electrolyzer plant efficiency, overall plant lifetime, lifetime of each of each of the electrolyzer modules (2a, 2b, 2c, 2d, 2e), operational safety, and maintenance patterns.

12. A method for controlling operation of an electrolyzer plant (1) comprising a plurality of electrolyzer modules (2a, 2b, 2c, 2d, 2e),
determining, for each of the plurality of electrolyzer modules (2a, 2b, 2c, 2d, 2e), an electrolyzer module set point at which the electrolyzer module (2a, 2b, 2c, 2d, 2e) is to be operated, wherein the electrolyzer module set points are determined such that their sum equals a prescribed overall plant set point of the electrolyzer plant (1), and
controlling operation of each of the plurality of electrolyzer modules (2a, 2b, 2c, 2d, 2e) at the respective electrolyzer module set point,
wherein the determining comprises inputting data representative of operation characteristics of each of the plurality of electrolyzer modules (2a, 2b, 2c, 2d, 2e) into a processing unit and the processing unit performing an optimization procedure that outputs the electrolyzer module set points, the optimization procedure comprising an optimization for one or more of overall electrolyzer plant efficiency, overall plant lifetime, lifetime of each of each of the electrolyzer modules (2a, 2b, 2c, 2d, 2e), operational safety, and maintenance patterns.

13. The method of claim 12,
wherein the determining further comprises creating and/or updating an overall electrolyzer plant model on the basis of the data representative of operation characteristics of each of the plurality of electrolyzer modules (2a, 2b, 2c, 2d, 2e) and performing the optimization procedure on the basis of the electrolyzer plant model, and/or
wherein the determining of the electrolyzer module set points is performed discontinuously, in particular in response to a user input, or automatically at predetermined times, or continuously during operation of the electrolyzer modules (2a, 2b, 2c, 2d, 2e); and/or
wherein the optimization procedure takes into account, in particular exploits, differences between efficiency curves of the electrolyzer modules (2a, 2b, 2c, 2d, 2e) and/or differences between degradation curves of the electrolyzer modules (2a, 2b, 2c, 2d, 2e), in particular one or more of different maximum efficiencies of the efficiency curves, different shapes of the efficiency curves, different time-dependencies of the efficiency curves, and different operating ranges of the electrolyzer modules (2a, 2b, 2c, 2d, 2e), and optionally corresponding efficiencies within said operating ranges of the electrolyzer modules (2a, 2b, 2c, 2d, 2e).

14. The method of any one of claims 12 or 13, wherein the optimization procedure comprises an optimization for maintenance patterns by setting constraints representative of a predetermined maintenance schedule, in particular, wherein the constraints include that one or more predicted characteristics, in particular operation characteristics, of the electrolyzer modules (2a, 2b, 2c, 2d, 2e) remain within a certain range at least until a predetermined time, in particular, that a predicted value for characteristics representative of the operational safety of each of the electrolyzer modules (2a, 2b, 2c, 2d, 2e) remain within a predetermined range until a predetermined time and/or that a predicted efficiency of each of the electrolyzer modules (2a, 2b, 2c, 2d, 2e) remain above a predetermined efficiency threshold at least until a predetermined time

15. The method of any one of claims 12 to 14, wherein the set points of each of the plurality of electrolyzer modules (2a, 2b, 2c, 2d, 2e) is determined in accordance with an operation mode, in particular an operation mode selected among a plurality of operation modes automatically and/or in response to a user input, wherein the operation mode is one of maximum overall electrolyzer plant efficiency, which may be referred to as an efficiency mode, minimum degradation of each of the electrolyzer modules (2a, 2b, 2c, 2d, 2e), which may be referred to as an extended-lifetime mode, and adherence to a maintenance schedule, which may also be referred to as maintenance compliance mode, or a combination of at least two of said operation modes.

## Patentansprüche

1. Elektrolyseuranlage (1), die eine Vielzahl von Elektrolyseurmodulen (2a, 2b, 2c, 2d, 2e) und ein System (3) zur Steuerung des Betriebs der Elektrolyseuranlage (1) umfasst, wobei das System eine Verarbeitungseinheit (4) umfasst und dafür konfiguriert ist:
Bestimmen eines Elektrolyseurmodul-Sollwerts, bei dem das Elektrolyseurmodul (2a, 2b, 2c, 2d, 2e) zu betreiben ist, für jedes der mehreren Elektrolyseurmodule (2a, 2b, 2c, 2d, 2e), wobei die Elektrolyseurmodul-Sollwerte so bestimmt werden, dass ihre Summe gleich einem vorgegebenen Gesamtanlagen-Sollwert der Elektrolyseuranlage (1) ist, und
Steuerung des Betriebs jedes der mehreren Elektrolyseurmodule (2a, 2b, 2c, 2d, 2e) bei dem jeweiligen Elektrolyseurmodul-Sollwert,
wobei das Bestimmen das Eingeben von Daten, die für Betriebscharakteristika jedes der Vielzahl von Elektrolyseurmodulen (2a, 2b, 2c, 2d, 2e) repräsentativ sind, in die Verarbeitungseinheit und das Durchführen einer Optimierungsprozedur durch die Verarbeitungseinheit umfasst, die die Elektrolyseurmodul-Sollwerte ausgibt, wobei die Optimierungsprozedur eine Optimierung für einen oder mehrere der folgenden Punkte umfasst: Gesamtwirkungsgrad der Elektrolyseur-Anlage, Lebensdauer der Elektrolyseur-Anlage, Lebensdauer jedes der Elektrolyseurmodule (2a, 2b, 2c, 2d, 2e), Betriebssicherheit und Wartungsmuster.

2. Elektrolyseuranlage (1) nach Anspruch 1, wobei das Bestimmen ferner das Erzeugen und/oder Aktualisieren eines Gesamtelektrolyseuranlagenmodells auf der Grundlage der Daten, die für die Betriebscharakteristika jedes der mehreren Elektrolyseurmodule (2a, 2b, 2c, 2d, 2e) repräsentativ sind, und das Durchführen des Optimierungsverfahrens auf der Grundlage des Elektrolyseuranlagenmodells umfasst.

3. Elektrolyseuranlage (1) nach Anspruch 1 oder 2, wobei die Daten, die für die Betriebscharakteristiken jedes der mehreren Elektrolyseurmodule (2a, 2b, 2c, 2d, 2e) repräsentativ sind, Daten umfassen, die für Effizienz-Charakteristiken, insbesondere eine Effizienz-Kurve, des Elektrolyseurmoduls (2a, 2b, 2c, 2d, 2e) und/oder Degradations-Charakteristiken, insbesondere eine Degradations-Kurve, des Elektrolyseurmoduls (2a, 2b, 2c, 2d, 2e) repräsentativ sind.

4. Elektrolyseuranlage (1) nach Anspruch 3, wobei das Optimierungsverfahren Unterschiede zwischen den Wirkungsgradkurven der Elektrolyseurmodule (2a, 2b, 2c, 2d, 2e) und/oder Unterschiede zwischen den Degradationskurven der Elektrolyseurmodule (2a, 2b, 2c, 2d, 2e) berücksichtigt, insbesondere ausnutzt, insbesondere einen oder mehrere unterschiedliche maximale Wirkungsgrade der Wirkungsgradkurven, unterschiedliche Formen der Wirkungsgradkurven, unterschiedliche Zeitabhängigkeiten der Wirkungsgradkurven und unterschiedliche Betriebsbereiche der Elektrolyseurmodule (2a, 2b, 2c, 2d, 2e) und gegebenenfalls entsprechende Wirkungsgrade innerhalb dieser Betriebsbereiche der Elektrolyseurmodule (2a, 2b, 2c, 2d, 2e).

5. Elektrolyseuranlage (1) nach einem der vorhergehenden Ansprüche, wobei das Optimierungsverfahren eine Optimierung für Wartungsmuster durch Festlegen von Beschränkungen umfasst, die für einen vorbestimmten Wartungsplan repräsentativ sind, wobei die Beschränkungen insbesondere beinhalten, dass eine oder mehrere vorhergesagte Eigenschaften der Elektrolyseurmodule (2a, 2b, 2c, 2d, 2e), insbesondere vorhergesagte Betriebseigenschaften, zumindest bis zu einem vorbestimmten Zeitpunkt innerhalb eines bestimmten Bereichs bleiben, insbesondere, dass ein vorhergesagter Wert für Merkmale, die die Betriebssicherheit jedes der Elektrolyseurmodule (2a, 2b, 2c, 2d, 2e) darstellen, bis zu einem vorbestimmten Zeitpunkt innerhalb eines vorbestimmten Bereichs bleiben und/oder dass ein vorhergesagter Wirkungsgrad jedes der Elektrolyseurmodule (2a, 2b, 2c, 2d, 2e) zumindest bis zu einem vorbestimmten Zeitpunkt über einem vorbestimmten Wirkungsgrad-Schwellenwert bleibt.

6. Elektrolyseuranlage (1) nach einem der vorhergehenden Ansprüche, wobei das System (3) so konfiguriert ist, dass es die Elektrolyseurmodul-Sollwerte in Übereinstimmung mit einem Betriebsmodus bestimmt, insbesondere einem Betriebsmodus, der aus einer Vielzahl von Betriebsmodi automatisch und/oder in Reaktion auf eine Benutzereingabe ausgewählt wird, wobei der Betriebsmodus einer der folgenden ist: maximaler Gesamtwirkungsgrad der Elektrolyseuranlage, was als ein Wirkungsgradmodus bezeichnet werden kann, eine minimale Verschlechterung jedes der Elektrolyseurmodule (2a, 2b, 2c, 2d, 2e), was als ein Modus mit verlängerter Lebensdauer bezeichnet werden kann, und die Einhaltung eines Wartungsplans, was auch als Modus zur Einhaltung der Wartung bezeichnet werden kann, oder eine Kombination von mindestens zwei der genannten Betriebsmodi ist.

7. Elektrolyseuranlage (1) nach einem der vorhergehenden Ansprüche, wobei das System (3) eine Steuervorrichtung (5) umfasst, die so konfiguriert ist, dass sie den Betrieb der mehreren Elektrolyseurmodule (2a, 2b, 2c, 2d, 2e) unter Verwendung der Steuerbefehle steuert,
insbesondere, wobei das System ferner ein ERP-System (6) umfasst, das so konfiguriert ist, dass es der Steuervorrichtung (5) Produktionsinformationen und/oder Wartungsinformationen bereitstellt und/oder Produktionsinformationen und/oder Wartungsinformationen aktualisiert, insbesondere als Reaktion auf den Empfang von Informationen, die die Elektrolyseurmodule (2a, 2b, 2c, 2d, 2e) betreffen, von der Steuervorrichtung (5).

8. Elektrolyseuranlage (1) nach einem der vorhergehenden Ansprüche, wobei das System (3) ausgebildet ist, die Bestimmung der Elektrolyseurmodul-Sollwerte diskontinuierlich, insbesondere in Reaktion auf eine Benutzereingabe, oder automatisch zu vorbestimmten Zeitpunkten, oder kontinuierlich während des Betriebs der Elektrolyseurmodule (2a, 2b, 2c, 2d, 2e) durchzuführen.

9. Verwendung eines Systems (3) zur Steuerung einer Elektrolyseuranlage (1), die eine Vielzahl von Elektrolyseurmodulen (2a, 2b, 2c, 2d, 2e) umfasst, insbesondere einer Elektrolyseuranlage nach einem der vorhergehenden Ansprüche, wobei das System (3) eine Verarbeitungseinheit (4) umfasst und konfiguriert ist, um:
für jedes der Mehrzahl von Elektrolyseurmodulen (2a, 2b, 2c, 2d, 2e) einen Elektrolyseurmodul-Sollwert zu bestimmen, bei dem das Elektrolyseurmodul (2a, 2b, 2c, 2d, 2e) zu betreiben ist, wobei die Elektrolyseurmodul-Sollwerte so bestimmt werden, dass ihre Summe einem vorgegebenen Gesamt-Anlagen-Sollwert der Elektrolyseuranlage (1) entspricht, und insbesondere, um den Betrieb jedes der mehreren Elektrolyseurmodule (2a, 2b, 2c, 2d, 2e) auf den jeweiligen Elektrolyseurmodul-Sollwert zu steuern,
wobei das Bestimmen das Eingeben von Daten, die für Betriebscharakteristika jedes der Vielzahl von Elektrolyseurmodulen (2a, 2b, 2c, 2d, 2e) repräsentativ sind, in die Verarbeitungseinheit und das Durchführen einer Optimierungsprozedur durch die Verarbeitungseinheit umfasst, die die Elektrolyseurmodul-Sollwerte ausgibt, wobei die Optimierungsprozedur eine Optimierung für einen oder mehrere der folgenden Punkte umfasst: Gesamtwirkungsgrad der Elektrolyseuranlage, Lebensdauer der Elektrolyseuranlage, Lebensdauer jedes der Elektrolyseurmodule (2a, 2b, 2c, 2d, 2e), Betriebssicherheit und Wartungsmuster.

10. Computerlesbares Medium, das Anweisungen enthält, die, wenn sie von einem Computer ausgeführt werden, den Computer veranlassen:
für jedes einer Mehrzahl von Elektrolyseurmodulen (2a, 2b, 2c, 2d, 2e) einer Elektrolyseuranlage (1) einen Elektrolyseurmodul-Sollwert zu bestimmen, bei dem das Elektrolyseurmodul (2a, 2b, 2c, 2d, 2e) zu betreiben ist, wobei die Elektrolyseurmodul-Sollwerte so bestimmt werden, dass ihre Summe gleich einem vorgegebenen Gesamt-Anlagen-Sollwert der Elektrolyseuranlage (1) ist, und insbesondere Steuersignale zur Steuerung des Betriebs jedes der mehreren Elektrolyseurmodule (2a, 2b, 2c, 2d, 2e) bei dem jeweiligen Elektrolyseurmodul-Sollwert bereitzustellen,
wobei das Bestimmen das Eingeben von Daten, die für Betriebscharakteristika jedes der Vielzahl von Elektrolyseurmodulen (2a, 2b, 2c, 2d, 2e) repräsentativ sind, in eine Verarbeitungseinheit umfasst und die Verarbeitungseinheit ein Optimierungsverfahren durchführt, das die Elektrolyseurmodul-Sollwerte ausgibt, wobei das Optimierungsverfahren eine Optimierung für einen oder mehrere der folgenden Punkte umfasst: Gesamtwirkungsgrad der Elektrolyseuranlage, Gesamtlebensdauer der Anlage, Lebensdauer jedes der Elektrolyseurmodule (2a, 2b, 2c, 2d, 2e), Betriebssicherheit und Wartungsmuster.

11. Computerprogrammprodukt, das Anweisungen enthält, die, wenn das Programm von einem Computer ausgeführt wird, den Computer dazu veranlassen,
für jedes einer Mehrzahl von Elektrolyseurmodulen (2a, 2b, 2c, 2d, 2e) einer Elektrolyseuranlage (1) einen Elektrolyseurmodul-Sollwert zu bestimmen, bei dem das Elektrolyseurmodul (2a, 2b, 2c, 2d, 2e) zu betreiben ist, wobei die Elektrolyseurmodul-Sollwerte so bestimmt werden, dass ihre Summe gleich einem vorgegebenen Gesamt-Anlagen-Sollwert der Elektrolyseuranlage (1) ist, und insbesondere Steuersignale zur Steuerung des Betriebs jedes der mehreren Elektrolyseurmodule (2a, 2b, 2c, 2d, 2e) bei dem jeweiligen Elektrolyseurmodul-Sollwert bereitzustellen,
wobei das Bestimmen das Eingeben von Daten, die für Betriebscharakteristika jedes der Vielzahl von Elektrolyseurmodulen (2a, 2b, 2c, 2d, 2e) repräsentativ sind, in eine Verarbeitungseinheit umfasst und die Verarbeitungseinheit ein Optimierungsverfahren durchführt, das die Elektrolyseurmodul-Sollwerte ausgibt, wobei das Optimierungsverfahren eine Optimierung für einen oder mehrere der folgenden Punkte umfasst: Gesamtwirkungsgrad der Elektrolyseuranlage, Gesamtlebensdauer der Anlage, Lebensdauer jedes der Elektrolyseurmodule (2a, 2b, 2c, 2d, 2e), Betriebssicherheit und Wartungsmuster.

12. Verfahren zur Steuerung des Betriebs einer Elektrolyseuranlage (1), die eine Vielzahl von Elektrolyseurmodulen (2a, 2b, 2c, 2d, 2e) umfasst,
Bestimmen eines Elektrolyseurmodul-Sollwerts, bei dem das Elektrolyseurmodul (2a, 2b, 2c, 2d, 2e) zu betreiben ist, für jedes der mehreren Elektrolyseurmodule (2a, 2b, 2c, 2d, 2e), wobei die Elektrolyseurmodul-Sollwerte so bestimmt werden, dass ihre Summe gleich einem vorgegebenen Gesamtanlagen-Sollwert der Elektrolyseuranlage (1) ist, und
Steuerung des Betriebs jedes der mehreren Elektrolyseurmodule (2a, 2b, 2c, 2d, 2e) bei dem jeweiligen Elektrolyseurmodul-Sollwert,
wobei das Bestimmen das Eingeben von Daten, die für Betriebscharakteristika jedes der Vielzahl von Elektrolyseurmodulen (2a, 2b, 2c, 2d, 2e) repräsentativ sind, in eine Verarbeitungseinheit umfasst und die Verarbeitungseinheit ein Optimierungsverfahren durchführt, das die Elektrolyseurmodul-Sollwerte ausgibt, wobei das Optimierungsverfahren eine Optimierung für einen oder mehrere der folgenden Punkte umfasst: Gesamtwirkungsgrad der Elektrolyseuranlage, Gesamtlebensdauer der Anlage, Lebensdauer jedes der Elektrolyseurmodule (2a, 2b, 2c, 2d, 2e), Betriebssicherheit und Wartungsmuster.

13. Verfahren nach Anspruch 12,
wobei das Bestimmen ferner das Erzeugen und/oder Aktualisieren eines Gesamtelektrolyseur-Anlagenmodells auf der Grundlage der Daten, die für die Betriebscharakteristika jedes der mehreren Elektrolyseurmodule (2a, 2b, 2c, 2d, 2e) repräsentativ sind, und das Durchführen des Optimierungsverfahrens auf der Grundlage des ElektrolyseurAnlagenmodells umfasst, und/oder
wobei die Bestimmung der Elektrolyseurmodul-Sollwerte diskontinuierlich, insbesondere in Reaktion auf eine Benutzereingabe, oder automatisch zu vorbestimmten Zeiten oder kontinuierlich während des Betriebs der Elektrolyseurmodule (2a, 2b, 2c, 2d, 2e) erfolgt; und/oder
wobei das Optimierungsverfahren Unterschiede zwischen Wirkungsgradkurven der Elektrolyseurmodule (2a, 2b, 2c, 2d, 2e) und/oder Unterschiede zwischen Degradationskurven der Elektrolyseurmodule (2a, 2b, 2c, 2d, 2e), insbesondere einen oder mehrere unterschiedliche maximale Wirkungsgrade der Wirkungsgradkurven, berücksichtigt, insbesondere ausnutzt unterschiedlichen Formen der Wirkungsgradkurven, unterschiedlichen Zeitabhängigkeiten der Wirkungsgradkurven und unterschiedlichen Betriebsbereichen der Elektrolyseurmodule (2a, 2b, 2c, 2d, 2e), und gegebenenfalls entsprechenden Wirkungsgraden innerhalb der genannten Betriebsbereiche der Elektrolyseurmodule (2a, 2b, 2c, 2d, 2e).

14. Verfahren nacheinem der Ansprüche 12 oder 13, wobei das Optimierungsverfahren eine Optimierung für Wartungsmuster durch Festlegen von Einschränkungen umfasst, die für einen vorbestimmten Wartungsplan repräsentativ sind, wobei die Einschränkungen insbesondere beinhalten, dass eine oder mehrere vorhergesagte Eigenschaften, insbesondere Betriebseigenschaften, der Elektrolyseurmodule (2a, 2b, 2c, 2d, 2e) zumindest bis zu einer vorbestimmten Zeit innerhalb eines bestimmten Bereichs bleiben, insbesondere, dass ein vorhergesagter Wert für Merkmale, die für die Betriebssicherheit jedes der Elektrolyseurmodule (2a, 2b, 2c, 2d, 2e) repräsentativ sind, bis zu einem vorbestimmten Zeitpunkt innerhalb eines vorbestimmten Bereichs bleibt und/oder dass ein vorhergesagter Wirkungsgrad jedes der Elektrolyseurmodule (2a, 2b, 2c, 2d, 2e) zumindest bis zu einem vorbestimmten Zeitpunkt oberhalb einer vorbestimmten Wirkungsgradschwelle bleibt.

15. Verfahren nach einem der Ansprüche 12 bis 14, wobei die Sollwerte jedes der mehreren Elektrolyseurmodule (2a, 2b, 2c, 2d, 2e) in Übereinstimmung mit einem Betriebsmodus bestimmt werden, insbesondere einem Betriebsmodus, der aus mehreren Betriebsmodi automatisch und/oder in Reaktion auf eine Benutzereingabe ausgewählt wird, wobei der Betriebsmodus einer der folgenden ist: maximaler Gesamtwirkungsgrad der Elektrolyseur-Anlage, was als ein Wirkungsgradmodus bezeichnet werden kann, eine minimale Degradation jedes der Elektrolyseurmodule (2a, 2b, 2c, 2d, 2e), was als ein Modus der verlängerten Lebensdauer bezeichnet werden kann, und die Einhaltung eines Wartungsplans, was auch als Modus der Wartungseinhaltung bezeichnet werden kann, oder eine Kombination von mindestens zwei der Betriebsmodi ist.

## Revendications

1. Installation d'électrolyse (1) comprenant une pluralité de modules d'électrolyse (2a, 2b, 2c, 2d, 2e) et un système (3) pour commander le fonctionnement de l'installation d'électrolyse (1), le système comprenant une unité de traitement (4) et configuré pour :
déterminer, pour chacun de la pluralité de modules d'électrolyse (2a, 2b, 2c, 2d, 2e), une valeur de consigne de module d'électrolyse à laquelle le module d'électrolyse (2a, 2b, 2c, 2d, 2e) doit fonctionner, les valeurs de consigne de module d'électrolyse étant déterminées de telle sorte que leur somme soit égale à une valeur de consigne globale prescrite d'installation de l'installation d'électrolyse (1), et
commander le fonctionnement de chacun de la pluralité de modules d'électrolyse (2a, 2b, 2c, 2d, 2e) à la valeur de consigne de module d'électrolyse respective,
la détermination comprenant l'introduction de données représentatives de caractéristiques de fonctionnement de chacun de la pluralité de modules d'électrolyse (2a, 2b, 2c, 2d, 2e) dans l'unité de traitement et l'unité de traitement exécutant une procédure d'optimisation qui produit les valeurs de consigne de module d'électrolyse, la procédure d'optimisation comprenant une optimisation d'un ou de plusieurs éléments parmi le rendement global de l'installation d'électrolyse, la durée de vie de l'installation d'électrolyse, la durée de vie de chacun des modules d'électrolyse (2a, 2b, 2c, 2d, 2e), la sécurité de fonctionnement et les schémas de maintenance.

2. Installation d'électrolyse (1) selon la revendication 1, dans laquelle la détermination comprend en outre la création et/ou la mise à jour d'un modèle global d'installation d'électrolyse sur la base des données représentatives de caractéristiques de fonctionnement de chacun de la pluralité de modules d'électrolyse (2a, 2b, 2c, 2d, 2e) et l'exécution de la procédure d'optimisation sur la base du modèle d'installation d'électrolyse.

3. Installation d'électrolyse (1) selon la revendication 1 ou 2, dans laquelle les données représentatives des caractéristiques de fonctionnement de chacun de la pluralité de modules d'électrolyse (2a, 2b, 2c, 2d, 2e) comprennent des données représentatives de caractéristiques de rendement, en particulier une courbe de rendement, du module d'électrolyse (2a, 2b, 2c, 2d, 2e) et/ou de caractéristiques de dégradation, en particulier une courbe de dégradation, du module d'électrolyse (2a, 2b, 2c, 2d, 2e).

4. Installation d'électrolyse (1) selon la revendication 3, dans laquelle la procédure d'optimisation prend en compte, en particulier exploite, des différences entre les courbes de rendement des modules d'électrolyse (2a, 2b, 2c, 2d, 2e) et/ou des différences entre les courbes de dégradation des modules d'électrolyse (2a, 2b, 2c, 2d, 2e), en particulier une ou plusieurs différences parmi des rendements maximums différents des courbes de rendement, des formes différentes des courbes de rendement, des dépendances temporelles différentes des courbes de rendement, et des plages de fonctionnement différentes des modules d'électrolyse (2a, 2b, 2c, 2d, 2e), et éventuellement des rendements correspondants dans lesdites plages de fonctionnement des modules d'électrolyse (2a, 2b, 2c, 2d, 2e).

5. Installation d'électrolyse (1) selon l'une quelconque des revendications précédentes, dans laquelle la procédure d'optimisation comprend une optimisation des schémas de maintenance par le fait de fixer des contraintes représentatives d'un schéma de maintenance prédéterminé, les contraintes incluant en particulier le fait qu'une ou plusieurs caractéristiques prédites des modules d'électrolyse (2a, 2b, 2c, 2d, 2e), en particulier des caractéristiques de fonctionnement prédites, restent dans une certaine plage au moins jusqu'à un moment prédéterminé, en particulier le fait qu'une valeur prédite pour des caractéristiques représentatives de la sécurité de fonctionnement de chacun des modules d'électrolyse (2a, 2b, 2c, 2d, 2e) reste dans une plage prédéterminée jusqu'à un moment prédéterminé et/ou un rendement prédit de chacun des modules d'électrolyse (2a, 2b, 2c, 2d, 2e) reste au-dessus d'un seuil de rendement prédéterminé au moins jusqu'à un moment prédéterminé.

6. Installation d'électrolyse (1) selon l'une quelconque des revendications précédentes, dans laquelle le système (3) est configuré pour déterminer les valeurs de consigne de module d'électrolyse selon un mode de fonctionnement, en particulier un mode de fonctionnement sélectionné parmi une pluralité de modes de fonctionnement automatiquement et/ou en réponse à une entrée utilisateur, le mode de fonctionnement étant l'un parmi les modes rendement global maximum d'installation d'électrolyse, qui peut être appelé mode rendement, dégradation minimale de chacun des modules d'électrolyse (2a, 2b, 2c, 2d, 2e), qui peut être appelé mode durée de vie étendue, et adhésion à un calendrier de maintenance, qui peut également être appelé mode conformité de maintenance, ou une combinaison d'au moins deux desdits modes de fonctionnement.

7. Installation d'électrolyse (1) selon l'une quelconque des revendications précédentes, dans laquelle le système (3) comprend un dispositif de commande (5) configuré pour commander le fonctionnement de la pluralité de modules d'électrolyse (2a, 2b, 2c, 2d, 2e) au moyen des instructions de commande,
le système comprenant en outre en particulier un système ERP (6) configuré pour fournir des informations de production et/ou des informations de maintenance au dispositif de commande (5) et/ou mettre à jour des informations de production et/ou des informations de maintenance, en particulier en réponse à la réception d'informations relatives aux modules d'électrolyse (2a, 2b, 2c, 2d, 2e) en provenance du dispositif de commande (5) .

8. Installation d'électrolyse (1) selon l'une quelconque des revendications précédentes, dans laquelle le système (3) est configuré pour exécuter la détermination des valeurs de consigne de module d'électrolyse de manière discontinue, en particulier en réponse à une entrée utilisateur, ou automatiquement à des moments prédéterminés, ou de manière continue pendant le fonctionnement des modules d'électrolyse (2a, 2b, 2c, 2d, 2e) .

9. Utilisation d'un système (3) pour commander une installation d'électrolyse (1) comprenant une pluralité de modules d'électrolyse (2a, 2b, 2c, 2d, 2e), en particulier une installation d'électrolyse en fonction de l'une quelconque des revendications précédentes, le système (3) comprenant une unité de traitement (4) et étant configuré pour :
déterminer, pour chacun de la pluralité de modules d'électrolyse (2a, 2b, 2c, 2d, 2e), une valeur de consigne de module d'électrolyse à laquelle le module d'électrolyse (2a, 2b, 2c, 2d, 2e) doit fonctionner, les valeurs de consigne de module d'électrolyse étant déterminées de telle sorte que leur somme soit égale à une valeur de consigne globale prescrite d'installation de l'installation d'électrolyse (1), et en particulier commander le fonctionnement de chacun de la pluralité de modules d'électrolyse (2a, 2b, 2c, 2d, 2e) à la valeur de consigne de module d'électrolyse respective,
la détermination comprenant l'introduction de données représentatives de caractéristiques de fonctionnement de chacun de la pluralité de modules d'électrolyse (2a, 2b, 2c, 2d, 2e) dans l'unité de traitement et l'unité de traitement exécutant une procédure d'optimisation qui produit les valeurs de consigne de module d'électrolyse, la procédure d'optimisation comprenant une optimisation d'un ou de plusieurs éléments parmi le rendement global de l'installation d'électrolyse, la durée de vie de l'installation d'électrolyse, la durée de vie de chacun des modules d'électrolyse (2a, 2b, 2c, 2d, 2e), la sécurité de fonctionnement et les schémas de maintenance.

10. Support lisible par ordinateur comprenant des instructions qui, lorsqu'elles sont exécutées par un ordinateur, amènent l'ordinateur à :
déterminer, pour chacun d'une pluralité de modules d'électrolyse (2a, 2b, 2c, 2d, 2e) d'une installation d'électrolyse (1), une valeur de consigne de module d'électrolyse à laquelle le module d'électrolyse (2a, 2b, 2c, 2d, 2e) doit fonctionner, les valeurs de consigne de module d'électrolyse étant déterminées de telle sorte que leur somme soit égale à une valeur de consigne globale prescrite d'installation de l'installation d'électrolyse (1), et en particulier produire des signaux de commande pour commander le fonctionnement de chacun de la pluralité de modules d'électrolyse (2a, 2b, 2c, 2d, 2e) à la valeur de consigne de module d'électrolyse respective,
la détermination comprenant l'introduction de données représentatives de caractéristiques de fonctionnement de chacun de la pluralité de modules d'électrolyse (2a, 2b, 2c, 2d, 2e) dans une unité de traitement et l'unité de traitement exécutant une procédure d'optimisation qui produit les valeurs de consigne de module d'électrolyse, la procédure d'optimisation comprenant une optimisation d'un ou de plusieurs éléments parmi le rendement global de l'installation d'électrolyse, la durée de vie de l'installation d'électrolyse, la durée de vie de chacun des modules d'électrolyse (2a, 2b, 2c, 2d, 2e), la sécurité de fonctionnement et les schémas de maintenance.

11. Produit de programme informatique, comprenant des instructions qui, lorsqu'elles sont exécutées par un ordinateur, amènent l'ordinateur à :
déterminer, pour chacun d'une pluralité de modules d'électrolyse (2a, 2b, 2c, 2d, 2e) d'une installation d'électrolyse (1), une valeur de consigne de module d'électrolyse à laquelle le module d'électrolyse (2a, 2b, 2c, 2d, 2e) doit fonctionner, les valeurs de consigne de module d'électrolyse étant déterminées de telle sorte que leur somme soit égale à une valeur de consigne globale prescrite d'installation de l'installation d'électrolyse (1), et en particulier produire des signaux de commande pour commander le fonctionnement de chacun de la pluralité de modules d'électrolyse (2a, 2b, 2c, 2d, 2e) à la valeur de consigne de module d'électrolyse respective,
la détermination comprenant l'introduction de données représentatives de caractéristiques de fonctionnement de chacun de la pluralité de modules d'électrolyse (2a, 2b, 2c, 2d, 2e) dans une unité de traitement et l'unité de traitement exécutant une procédure d'optimisation qui produit les valeurs de consigne de module d'électrolyse, la procédure d'optimisation comprenant une optimisation d'un ou de plusieurs éléments parmi le rendement global de l'installation d'électrolyse, la durée de vie de l'installation d'électrolyse, la durée de vie de chacun des modules d'électrolyse (2a, 2b, 2c, 2d, 2e), la sécurité de fonctionnement et les schémas de maintenance.

12. Procédé de commande du fonctionnement d'une installation d'électrolyse (1) comprenant une pluralité de modules d'électrolyse (2a, 2b, 2c, 2d, 2e),
déterminant, pour chacun de la pluralité de modules d'électrolyse (2a, 2b, 2c, 2d, 2e), une valeur de consigne de module d'électrolyse auquel le module d'électrolyse (2a, 2b, 2c, 2d, 2e) doit fonctionner, les valeurs de consigne de module d'électrolyse étant déterminées de telle sorte que leur somme soit égale à une valeur de consigne globale prescrite d'installation de l'installation d'électrolyse (1), et
commandant le fonctionnement de chacun de la pluralité de modules d'électrolyse (2a, 2b, 2c, 2d, 2e) à la valeur de consigne de module d'électrolyse respective,
la détermination comprenant l'introduction de données représentatives de caractéristiques de fonctionnement de chacun de la pluralité de modules d'électrolyse (2a, 2b, 2c, 2d, 2e) dans une unité de traitement et l'unité de traitement exécutant une procédure d'optimisation qui produit les valeurs de consigne de module d'électrolyse, la procédure d'optimisation comprenant une optimisation d'un ou de plusieurs éléments parmi le rendement global de l'installation d'électrolyse, la durée de vie de l'installation d'électrolyse, la durée de vie de chacun des modules d'électrolyse (2a, 2b, 2c, 2d, 2e), la sécurité de fonctionnement et les schémas de maintenance.

13. Procédé selon la revendication 12,
dans lequel la détermination comprend en outre la création et/ou la mise à jour d'un modèle global d'installation d'électrolyse sur la base des données représentatives de caractéristiques de fonctionnement de chacun de la pluralité de modules d'électrolyse (2a, 2b, 2c, 2d, 2e) et l'exécution de la procédure d'optimisation sur la base du modèle d'installation d'électrolyse, et/ou dans lequel la détermination des valeurs de consigne de module d'électrolyse est exécutée de manière discontinue, en particulier en réponse à une entrée utilisateur, ou automatiquement à des moments prédéterminés, ou de manière continue pendant le fonctionnement des modules d'électrolyse (2a, 2b, 2c, 2d, 2e) ; et/ou
dans lequel la procédure d'optimisation prend en compte, en particulier exploite, des différences entre les courbes de rendement des modules d'électrolyse (2a, 2b, 2c, 2d, 2e) et/ou des différences entre les courbes de dégradation des modules d'électrolyse (2a, 2b, 2c, 2d, 2e), en particulier une ou plusieurs différences parmi des rendements maximums différents des courbes de rendement, des formes différentes des courbes de rendement, des dépendances temporelles différentes des courbes de rendement, et des plages de fonctionnement différentes des modules d'électrolyse (2a, 2b, 2c, 2d, 2e), et éventuellement des rendements correspondants dans lesdites plages de fonctionnement des modules d'électrolyse (2a, 2b, 2c, 2d, 2e).

14. Procédé selon l'une quelconque des revendications 12 ou 13, dans laquelle la procédure d'optimisation comprend une optimisation des schémas de maintenance par le fait de fixer des contraintes représentatives d'un schéma de maintenance prédéterminé, les contraintes incluant en particulier le fait qu'une ou plusieurs caractéristiques prédites des modules d'électrolyse (2a, 2b, 2c, 2d, 2e), en particulier des caractéristiques de fonctionnement prédites, restent dans une certaine plage au moins jusqu'à un moment prédéterminé, en particulier le fait qu'une valeur prédite pour des caractéristiques représentatives de la sécurité de fonctionnement de chacun des modules d'électrolyse (2a, 2b, 2c, 2d, 2e) reste dans une plage prédéterminée jusqu'à un moment prédéterminé et/ou un rendement prédit de chacun des modules d'électrolyse (2a, 2b, 2c, 2d, 2e) reste au-dessus d'un seuil de rendement prédéterminé au moins jusqu'à un moment prédéterminé.

15. Procédé selon l'une quelconque des revendications 12 à 14, dans lequel les valeurs de consigne de chacun de la pluralité de modules d'électrolyse (2a, 2b, 2c, 2d, 2e) sont déterminées selon un mode de fonctionnement, en particulier un mode de fonctionnement sélectionné parmi une pluralité de modes de fonctionnement automatiquement et/ou en réponse à une entrée utilisateur, le mode de fonctionnement étant l'un parmi les modes rendement global maximum d'installation d'électrolyse, qui peut être appelé mode rendement, dégradation minimale de chacun des modules d'électrolyse (2a, 2b, 2c, 2d, 2e), qui peut être appelé mode durée de vie étendue, et adhésion à un calendrier de maintenance, qui peut également être appelé mode conformité de maintenance, ou une combinaison d'au moins deux desdits modes de fonctionnement.
